# EUROPEAN PATENT SPECIFICATION

(11) **EP 2 977 627 B1**
(45) Date of publication and mention of the grant of the patent: **08.04.2020**
(21) Application number: 14178588.1
(22) Date of filing: 25.07.2014
(51) Int. Cl.: F16C 23/04, F16C 35/02, F16C 35/067, F16C 11/06, B60G 7/00

(54) **Self aligning mounting feature of a bearing outer race**
Selbstausrichtende Montieranordnung eines Außenrings
Chemin de roulement externe muni d'un élément pour son centrage automatique lors du montage

(43) Date of publication of application: 27.01.2016
(73) Proprietor: Schaublin SA, 2800 Delémont (CH)
(72) Inventor: Charmillot, Philippe, 2832 Rebeuvelier (CH)
(74) Representative: Seemann & Partner Patentanwälte mbB

(56) References cited:
- FR-A1- 2 492 920
- US-A1- 2013 044 972
- US-A1- 2013 067 684

## Description

### FIELD OF THE INVENTION

The present invention relates to an outer race of a bearing assembly, and more particularly to an outer race of a bearing assembly having a self aligning feature on at least one axial end thereof.

### BACKGROUND OF THE INVENTION

A typical bearing includes an outer ring that defines an outside diameter. To ensure that the bearing remains in place within a bore of a housing, the outside diameter of the outer ring is slightly larger than an inner diameter of the bore of the housing. This results in a press fit of the outer ring into the bore of the housing. However, aligning the outer ring in the bore for press fitting is difficult.

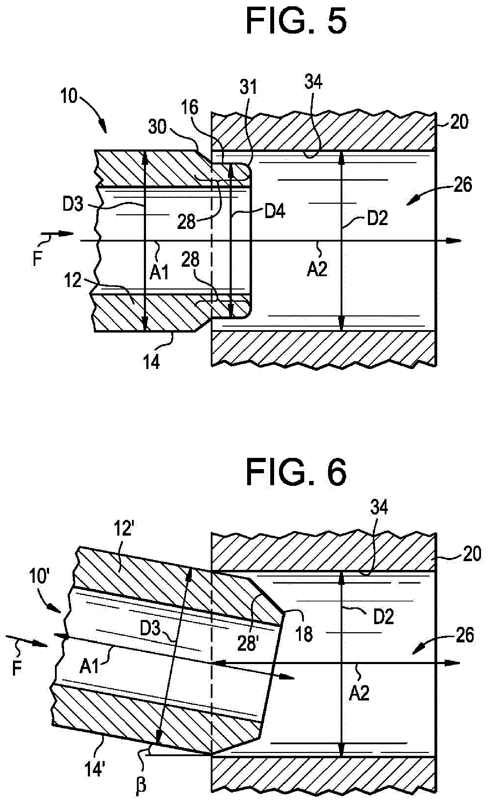

One solution to this difficulty is creating a chamfer 28' on an axial end 18 of the bearing 10', as shown in prior art FIG. 6. However, the chamfer 28' can cause misalignment of the outer ring 12' in the bore 26. For example, the axis A1 about which the bearing 10 is centered is easily misaligned with respect to the axis A2 about which the bore 26 is centered. It is difficult to properly align in the bore 26, as the axis A1 about which the bearing 10' is centered is offset from the axis A2 about which the bore is centered. The prior art bearing assembly 10' may be misaligned at an angle β, causing the force F to be offset with respect to the axis A2. Such misalignment can occur upon application of a force F in any direction other than that defined by the axis A2.

FR 2 492 920 A1 discloses a bearing for use in a bore of a low strength material housing. The bearing comprises a race which is provided with a reduced outside portion which is connected to the rest of the race by an annular shoulder. The annular shoulder is formed to avoid an abrupt step between two different outside diameters to reduce the chance of scoring the house bore at installation.

Moreover, US 2013/067682 A1 discloses a raceway bushing comprising a substantially cylindrical peripheral wall forming a bushing inner surface and a bushing outer surface, a bottom wall extending from the peripheral wall and forming an inner bottom surface and an outer bottom surface, a bottom opening being formed in the bottom wall.

Above all, US 2013/044972 A1 discloses a wheel bearing apparatus. The wheel bearing apparatus has a cylindrical pilot portion adapted to be fit into a knuckle. The pilot portion has a first guiding portion and a second guiding portion. A fitting width of the first guiding portion with the knuckle is set larger than a fitting width of the second guiding portion with the knuckle.

### OBJECT OF THE INVENTION

The object of the invention is to improve the alignment of a bearing in the bore of the housing and to facilitate engagement of the outer ring with the bore which has long been sought in the art.

### SUMMARY OF THE INVENTION

The object is solved by a bearing and housing assembly according to claim 1. Moreover, the object is also solved by a method of positioning an outer ring of a bearing in a housing according to claim 3.

A bearing and housing assembly includes a housing and an outer ring. The housing has an interior surface that defines a bore extending therethrough. The outer ring has a substantially cylindrical outer surface that has a shoulder proximate an end thereof. The shoulder defines a self aligning feature. The self aligning feature self aligns the outer ring in the bore.

A method of positioning an outer ring of a bearing in a housing includes providing a housing and an outer ring for a bearing. The bore has an interior surface that defines a bore that extends therethrough. The outer ring has a substantially cylindrical outer surface that has at least one shoulder proximate an end thereof. The method further includes self aligning the outer ring in the bore.

### BRIEF DESCRIPTION OF THE DRAWINGS

FIG. 1 is a photograph of a bearing assembly of the present invention;
FIG. 2 is an enlarged photograph of a portion of the bearing assembly of FIG. 1;
FIG. 3 is cross sectional view of a portion of the bearing assembly of FIG. 1, taken across the line 3-3;
FIG. 4 is a cross sectional view of the bearing assembly of the present invention wherein the bearing assembly is positioned in a housing;
FIG. 5 is a partial cross sectional view of the bearing assembly of FIG. 1 wherein the bearing assembly is being aligned in a housing; and
FIG. 6 is a partial cross sectional view of a prior art bearing assembly wherein the bearing assembly is being misaligned relative to the housing.

### DETAILED DESCRIPTION

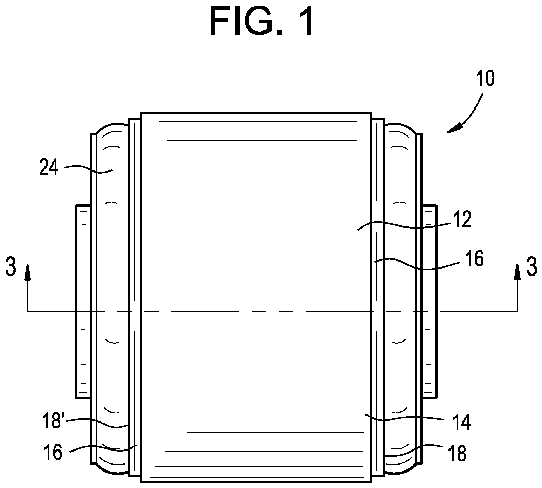

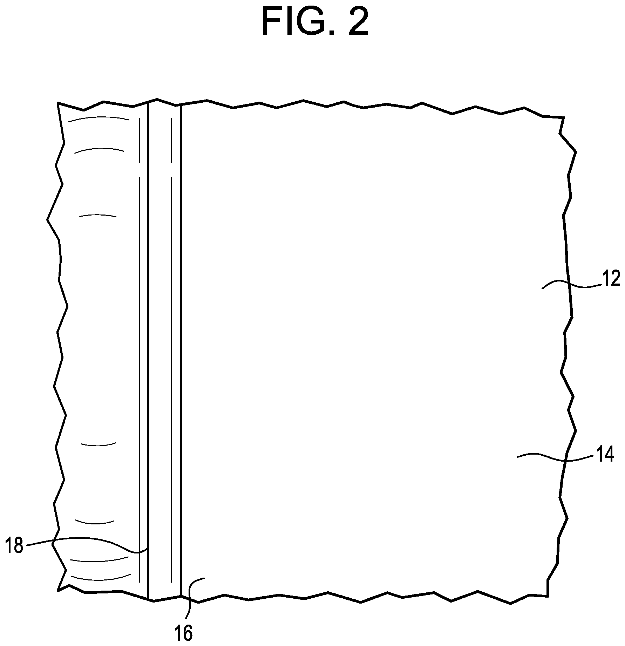

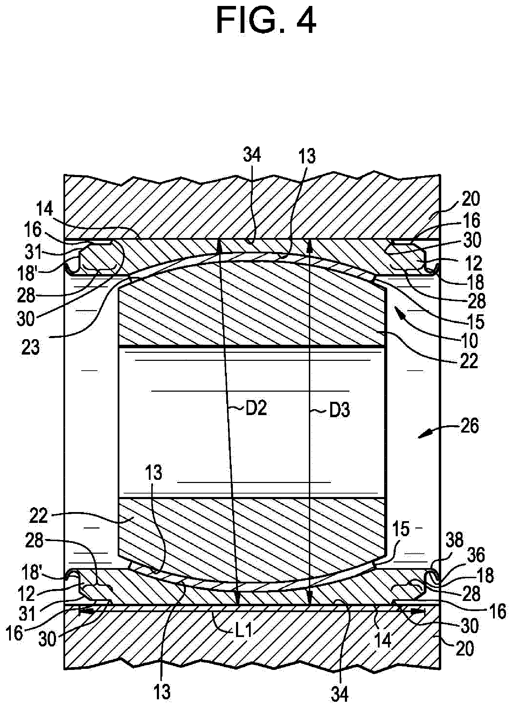

As shown in FIGS. 1-4, a bearing assembly is generally designated by the numeral 10. The bearing assembly 10 includes an outer ring 12. The outer ring 12 includes a substantially cylindrical outer surface 14. The substantially cylindrical outer surface 14 has a shoulder 16 proximate each axial end 18 and 18' thereof. The shoulder 16 defines a self aligning feature 28 for self-aligning the outer ring 12 in a housing 20. Although a shoulder 16 is shown positioned proximate each axial end 18 of the substantially cylindrical surface 12 as described herein, the present invention is not limited in this regard, as only one shoulder 16 may be positioned proximate one of the axial ends 18 or 18' of the substantially cylindrical outer surface 14. As shown in FIG. 4, the bearing assembly includes an inner ring 22. The inner ring 22 is disposed partially in the outer ring 12. A seal 24 (e.g., an elastomeric seal) extends between the inner ring 22 and the outer ring 12. As shown in FIG. 4, the outer ring 12 includes a radially extending hub 38 having a U-shaped cross section. The U-shaped cross section defines a groove 36. One end of the seal 24 is positioned in the groove 36 and another end of the seal 24 engages a portion of the inner ring 22. The seal 24 prevents debris from entering the bearing 10. The inner ring 22 has an arcuate outer surface 23 complementary to an inner surface 13 of the outer member 12. A liner 15 (e.g., a Polytetrafluoroethylene liner) is disposed between the inner ring 22 and the outer ring 12. The liner 15 is self-lubricating in that no additional lubricant such as grease is required.

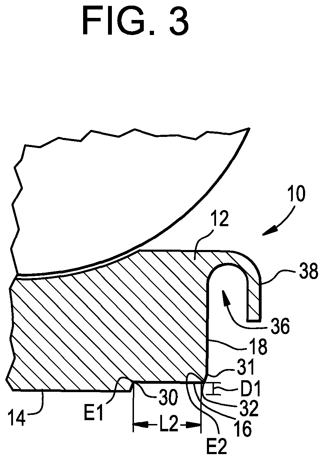

As best shown in FIG. 3, the shoulder 16 has a depth D1, as measured radially inward from the outer surface 14. In one embodiment, the depth D1 is about 0.1 mm (0.0039 in.). Although a depth D1 of 0.1 mm (0.0039 in.) is described, the present invention is not limited in this regard, as any suitable depth may be used, including, but not limited to, 0.15 mm (0.0059 in.) or 0.2 mm (0.0078 in.). As best shown in FIG. 4, the outer ring 12 has a first axial length L1. As best shown in FIG. 3, the shoulder 16 has a second axial length L2. In one embodiment, the second axial length L2 is 4 to 25 percent of the first axial length L1. In one embodiment, the second length L2 is 4 to 6 percent of the first axial length L1. In one embodiment, the second axial length L2 is 5.9 percent of the first axial length L1. Although the second axial length L2 is described as having a length of between 4 to 25 percent, 4 to 6 percent and 5.9 percent of the first axial length L1, the present invention is not limited in this regard, as one skilled in the art would anticipate, in light of the disclosures herein, that other suitable length ratios may be employed to the same effect.

As best shown in FIG. 3, the outer ring 12 of the bearing assembly 10 defines a self-aligning feature 28 that includes 1) a first chamfer 30 proximate a first axial end E1 of the shoulder 16, 2) the shoulder 16 and 3) a second chamfer 31 proximate a second axial end E2 of the shoulder 16. In one embodiment, the shoulder 16 has a depth D1 of approximately 0.1 mm (0.0039 in.). The first chamfer 30 has an angle of approximately 45 degrees. In one embodiment, the second chamfer 31 has an angle of approximately 45 degrees. Although the first chamfer 30 is described as having an angle of 45 degrees, the present invention is not limited in this regard, as any suitable angle may be employed, such as, but not limited to, 60 degrees. Although the second chamfer 31 is described as having an angle of approximately 45 degrees, the present invention is not limited in this regard, as any suitable angle, such as, but not limited to, 60 degrees, may be employed.

As shown in FIG. 4, the housing 20 has a bore 26 extending therethrough. The outer ring 12 is positioned in the bore 26. The bore 26 has an inner diameter D2 defining a generally cylindrical inner surface 34. The substantially cylindrical outer surface 14 of the outer ring 12 defines a first outer diameter D3. The inner diameter D2 can be up to the first outer diameter D3 for press fitting the outer ring 12 into the bore 26. The shoulder 16 has a second outer diameter D4. In one embodiment, the second outer diameter D4 is about 0.2 mm (0.0078 in.) less than the first outer diameter D3. A diametrical interference fit (DIF) is defined herein as the first outer diameter D3 minus the inner diameter D2. In one embodiment, the inner diameter D2 is about equal to the first outer diameter D3 (i.e., DIF=0). In another embodiment, the first outer diameter D3 is less than or equal to 0.16 mm (0.0063 in.) more than the inner diameter D2 for the self aligning feature 28 to work properly. In another embodiment, the DIF can be up to 80 percent of twice the depth D1 (e.g., DIF=(0.8)(2)(D1)). For example, DIF=(0.8)(2)(0.1)=0.16 mm (0.0063 in.), where D1=0.1 mm (0.0039 in.).

As shown in FIG. 5, the self aligning feature 28 facilitates placement of the outer ring 12 in the bore 26. As the inner diameter D2 of the bore 26 and the first outer diameter D3 of the substantially cylindrical outer surface 14 are equal, a force F must be applied to the outer ring 12 to press fit the outer ring 12 in the bore 26.

As shown in FIG. 5, the self aligning feature 28 of the present invention allows for disposal of the shoulder 16 in the bore 26 prior to engagement of the bore 26 with the substantially cylindrical outer surface 14. Since the shoulder 16 is about 0.1 mm deep, the shoulder 16 aligns the outer ring 12 in the bore 26 so that the axis A1 and the axis A2 are nearly coaxial. The first chamfer 30 and the second chamfer 31 allow the outer ring 12 to gradually engage the bore 26. Thus, disposal of the outer ring 12 in the bore 26 occurs in a self aligning manner.

A method of self aligning the outer ring 12 of a bearing 10 in a housing 20 includes providing the housing 20 having the interior surface 34 defining the bore 26 extending therethrough and the outer ring 12 for the bearing 10, the outer ring 12 having a substantially cylindrical outer surface 14 that has the shoulder 16 proximate an end 18 thereof. The second chamfer 31 makes contact with the bore 26, allowing the self aligning feature 28 to gradually engage the bore 26. The shoulder 16 aligns the outer ring 12 in the bore 26. The first chamfer 30 makes contact with the bore 26, allowing the substantially cylindrical outer surface 14 to gradually engage the bore 26.

Although the present invention has been disclosed and described with reference to certain embodiments thereof, it should be noted that other variations and modifications may be made, and it is intended that the following claims cover the variations and modifications within the true scope of the invention.

## Claims

1. A bearing (10) and housing (20) assembly, the assembly comprising:
a housing (20) having an interior surface (34) defining a bore (26) extending therethrough, the bore (26) having an inner diameter (D2) defining a generally cylindrical inner surface (34);
an outer ring (12) positioned in the bore (26), the outer ring (12) having a substantially cylindrical outer surface (14) having a first outer diameter (D3) and having at least one shoulder (16) proximate an end of the outer ring (12), the shoulder (16) having a second outer diameter (D4); and
the at least one shoulder (16) defining a self-aligning feature (28) that self-aligns the outer ring (12) in the bore (26)
wherein the self-aligning feature (28) includes:
the at least one shoulder (16), wherein the at least one shoulder (16) having depth (D1) of about 0.1 mm,
a first chamfer (30) proximate a first axial end (E1) of the shoulder (16), and
a second chamfer (31) proximate a second axial end (E2) of the shoulder (16);
wherein the substantially cylindrical outer surface (14) has a first axial length (L1) and the at least one shoulder (16) has a second axial length (L2) of 4 to 25 percent of the first axial length (L1),
wherein the outer ring (12) is press fit into the bore (26) of the housing (20) according to a diametral interference fit that is about equal to the outer diameter (D3) minus the inner diameter (D2).

2. The assembly of claim 1, wherein the diametral interference fit is up to about 80 percent of two times the depth (D1).

3. A method of positioning an outer ring (12) of a bearing (10) in a housing (20), the method comprising:
providing a housing (20) having an interior surface (34) defining a bore (26) extending therethrough and an outer ring (12), the outer ring (12) having a substantially cylindrical outer surface (14) having at least one shoulder (16) proximate an end (18) of the outer ring (12) and a self-aligning feature (28),
wherein the self-aligning feature (28) includes:
the at least one shoulder (16), wherein the at least one shoulder (16) having depth (D1) of about 0.1 mm,
a first chamfer (30) proximate a first axial end (E1) of the shoulder (16), and
a second chamfer (31) proximate a second axial end (E2) of the shoulder (16);
self aligning the outer ring (12) in the bore (26) of the housing (20) by using the self aligning feature (28) such that the axis A1 of the bearing (10) and the axis A2 of the bore (26) are nearly coaxial;
and applying a force (F) to the outer ring (12) to position the outer ring (12) in the bore (26) of the housing (20) according to a diametral interference fit that is about equal to the outer diameter (D3) minus the inner diameter (D2).

## Patentansprüche

1. Baugruppe aus Lager (10) und Gehäuse (20), wobei die Baugruppe umfasst:
ein Gehäuse (20), das eine Innenoberfläche (34) aufweist, die eine sich durch sie hindurch erstreckende Bohrung (26) definiert, wobei die Bohrung (26) einen Innendurchmesser (D2) aufweist, der eine allgemein zylindrische Innenoberfläche (34) definiert;
einen Außenring (12), der in der Bohrung (26) positioniert ist, wobei der Außenring (12) eine im Wesentlichen zylindrische Außenoberfläche (14) aufweist, die einen ersten Außendurchmesser (D3) aufweist, und mindestens eine Schulter (16) in der Nähe eines Endes des Außenrings (12) aufweist, wobei die Schulter (16) einen zweiten Außendurchmesser (D4) aufweist; und
die mindestens eine Schulter (16) eine selbstausrichtende Anordnung (28) definiert, die den Außenring (12) in der Bohrung (26) selbstausrichtet,
wobei die selbstausrichtende Anordnung (28) umfasst:
die mindestens eine Schulter (16), wobei die mindestens eine Schulter (16) eine Tiefe (D1) von etwa 0,1 mm aufweist;
eine erste Abschrägung (30) in der Nähe von einem ersten axialen Ende (E1) der Schulter (16), und
eine zweite Abschrägung (31) in der Nähe von einem zweiten axialen Ende (E2) der Schulter (16);
wobei die im Wesentlichen zylindrische Außenoberfläche (14) eine erste axiale Länge (L1) aufweist und die mindestens eine Schulter (16) eine zweite axiale Länge (L2) von 4 bis 25 Prozent der ersten axialen Länge (L1) aufweist,
wobei der Außenring (12) in die Bohrung (26) des Gehäuses (20) gemäß einer diametralen Übermaßpassung, die etwa gleich dem Außendurchmesser (D3) minus der Innendurchmesser (D2) ist, pressgepasst ist.

2. Baugruppe nach Anspruch 1, wobei die diametrale Übermaßpassung bis zu etwa 80 Prozent des Zweifachen der Tiefe (D1) beträgt.

3. Verfahren zum Positionieren eines Außenrings (12) eines Lagers (10) in einem Gehäuse (20), wobei das Verfahren umfasst:
Bereitstellen eines Gehäuses (20), das eine Innenoberfläche (34) aufweist, die eine sich durch sie hindurch erstreckende Bohrung (26) definiert, und eines Außenrings (12), wobei der Außenring (12) eine im Wesentlichen zylindrische Außenoberfläche (14) aufweist, die mindestens eine Schulter (16) in der Nähe eines Endes (18) des Außenrings (12) und eine selbstausrichtende Anordnung (28) aufweist,
wobei die selbstausrichtende Anordnung (28) umfasst:
die mindestens eine Schulter (16), wobei die mindestens eine Schulter (16) eine Tiefe (D1) von etwa 0,1 mm aufweist,
eine erste Abschrägung (30) in der Nähe eines ersten axialen Endes (E1) der Schulter (16), und
eine zweite Abschrägung (31) in der Nähe eines zweiten axialen Endes (E2) der Schulter (16);
Selbstausrichten des Außenrings (12) in der Bohrung (26) des Gehäuses (20) unter Verwendung der selbstausrichtenden Anordnung (28) derart, dass die Achse A1 des Lagers (10) und die Achse A2 der Bohrung (26) nahezu koaxial sind; und
Anwenden einer Kraft (F) auf den Außenring (12) zum Positionieren des Außenrings (12) in der Bohrung (26) des Gehäuses (20) gemäß einer diametralen Übermaßpassung, die etwa gleich dem Außendurchmesser (D3) minus der Innendurchmesser (D2) ist.

## Revendications

1. Ensemble palier (10) et logement (20), l'ensemble comportant:
un logement (20) ayant une surface intérieure (34) définissant un alésage (26) s'étendant à travers elle, l'alésage (26) ayant un diamètre intérieur (D2) définissant une surface intérieure (34) généralement cylindrique;
une bague extérieure (12) positionnée dans l'alésage (26), la bague extérieure (12) ayant une surface extérieure (14) sensiblement cylindrique ayant un premier diamètre extérieur (D3) et ayant au moins un épaulement (16) à proximité d'une extrémité de la bague extérieure (12), l'épaulement (16) ayant un second diamètre extérieur (D4); et
le au moins un épaulement (16) définissant un élément de centrage automatique (28) qui centre automatiquement la bague extérieure (12) dans l'alésage (26)
dans lequel l'élément de centrage automatique (28) inclut:
le au moins un épaulement (16), dans lequel le au moins un épaulement (16) a une profondeur (D1) d'environ 0,1 mm,
un premier chanfrein (30) à proximité d'une première extrémité axiale (E1) de l'épaulement (16) et
un second chanfrein (31) à proximité d'une seconde extrémité axiale (E2) de l'épaulement (16);
dans lequel la surface extérieure (14) sensiblement cylindrique a une première longueur axiale (L1) et le au moins un épaulement (16) a une seconde longueur axiale (L2) de 4 % à 25 % de la première longueur axiale (L1),
dans lequel la bague extérieure (12) est ajustée par pression dans l'alésage (26) du logement (20) selon un ajustement serré diamétral qui est à peu près égal au diamètre extérieur (D3) moins le diamètre intérieur (D2).

2. Ensemble selon la revendication 1, dans lequel l'ajustement serré diamétral représente jusqu'à environ 80 % de deux fois la profondeur (D1).

3. Procédé de positionnement d'une bague extérieure (12) d'un palier (10) dans un logement (20), le procédé comportant:
la fourniture d'un logement (20) ayant une surface intérieure (34) définissant un alésage (26) s'étendant à travers elle et une bague extérieure (12), la bague extérieure (12) ayant une surface extérieure (14) sensiblement cylindrique ayant au moins un épaulement (16) à proximité d'une extrémité (18) de la bague extérieure (12) et un élément de centrage automatique (28),
dans lequel l'élément de centrage automatique (28) inclut:
le au moins un épaulement (16), dans lequel le au moins un épaulement (16) a une profondeur (D1) d'environ 0,1 mm,
un premier chanfrein (30) à proximité d'une première extrémité axiale (E1) de l'épaulement (16) et
un second chanfrein (31) à proximité d'une seconde extrémité axiale (E2) de l'épaulement (16);
le centrage automatique de la bague extérieure (12) dans l'alésage (26) du logement (20) à l'aide de l'élément de centrage automatique (28), de sorte que l'axe A1 du palier (10) et l'axe A2 de l'alésage (26) soient presque coaxiaux;
et l'application d'une force (F) à la bague extérieure (12) pour positionner la bague extérieure (12) dans l'alésage (26) du logement (20) selon un ajustement serré diamétral qui est à peu près égal au diamètre extérieur (D3) moins le diamètre intérieur (D2).
